# EUROPEAN PATENT APPLICATION

(11) **EP 4 190 619 A1**
(43) Date of publication of application: **07.06.2023**
(21) Application number: 21857732.8
(22) Date of filing: 19.08.2021
(51) Int. Cl.: B60L 5/39, B61F 5/52

(54) **CURRENT-RECEIVING APPARATUS AND FRAMEWORK**

(30) Priority: 20.08.2020 CN 202010842970
(71) Applicant: CRRC Zhuzhou Locomotive Co., Ltd., Zhuzhou, Hunan 412001 (CN)
(72) Inventor: ZHANG, Chong, Zhuzhou, Hunan 412001 (CN); LI, Guanjun, Zhuzhou, Hunan 412001 (CN); YAN, Zhijun, Zhuzhou, Hunan 412001 (CN); SUN, Zhiming, Zhuzhou, Hunan 412001 (CN); ZOU, Wenhui, Zhuzhou, Hunan 412001 (CN); CHEN, Shumei, Zhuzhou, Hunan 412001 (CN); LI, Xiaoyan, Zhuzhou, Hunan 412001 (CN); LIAO, Congjian, Zhuzhou, Hunan 412001 (CN); LUO, Han, Zhuzhou, Hunan 412001 (CN); SHEN, Changhong, Zhuzhou, Hunan 412001 (CN); ZHU, Xiangyang, Zhuzhou, Hunan 412001 (CN); ZHANG, Yang, Zhuzhou, Hunan 412001 (CN); HE, Xing, Zhuzhou, Hunan 412001 (CN); WU, Caixiang, Zhuzhou, Hunan 412001 (CN)
(74) Representative: Kramer Barske Schmidtchen Patentanwälte PartG mbB
(86) International application number: PCT/CN2021/113500
(87) International publication number: WO 2022/037640

(57) **Abstract**

A framework (10) comprises a longitudinal beam (12), a crossbeam and a mounting base; a groove (13) is provided on the longitudinal beam (12), and the opening of the groove (13) faces toward the outer side of the framework (10); a current-receiving apparatus case (1) is connected to the framework (10) by means of the mounting base (9), and the mounting base (9) is fixed inside the groove (13) by means of welding or fasteners.A current-receiving apparatus is also related to, which comprises a current-receiving apparatus case (1), rotary arms (2) and collector shoes (3); the upper end of the rotary arm (2) is hinged to the current-receiving apparatus case (1); the collector shoe (3) is connected to the lower end of the rotary arm (2); the current-receiving apparatus case (1) has a space for the rotary arm (2) to tilt; the rotary arm (2) can drive the collector shoe (3) to rotate about the hinged point until same comes into contact with a side surface of a third rail (4), or rotate until same comes into contact with a bottom surface of the third rail (4), so as to achieve a current-receiving means that integrates the bottom surface and side surface with the same bogie, and allow same to adapt to changes in the current-receiving means due to limited space of a railway bridge, thus ensuring the normal operation of vehicles.

## Description

### Field of the Invention

The present invention relates to the technical field of rail vehicles, in particular to a current-receiving apparatus and a framework.

### Background of the Invention

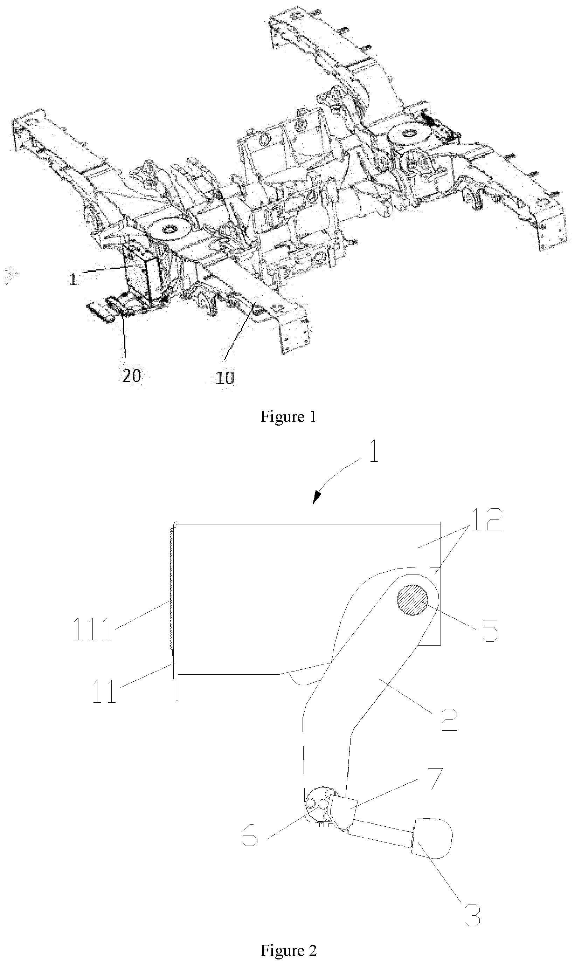

At present, existing shunting locomotives developed in China are mainly used on straight and curved lines, and mainly receive current by means of a pantograph and a bottom surface of a third rail. A current-receiving mounting structure on the bottom surface of the third rail is as shown in FIG. 1, where a current receiver 20 is fixed on a current receiver case 1 on a side beam of a framework 10 by four hexagon bolts. However, common current-receiving rails cannot be laid on some rail lines (such as bridges) due to the limitation of line space, so side current-receiving rails have been built. For such rail lines, common current-receiving means cannot meet the needs of normal operation of vehicles, so both the bottom surface and side surface of the third rail shall be used to receive current. Meanwhile, due to the requirements of railway clearance conditions, the transverse and vertical mounting spaces for the current receiver are greatly reduced, and the mounting structure shall be further optimized.

### Summary of the Invention

The technical problem to be solved by the present invention is to overcome the deficiencies of the prior art, and to provide a current-receiving apparatus which can receive current on both a bottom surface and a side surface of a third rail and ensure the normal operation of a vehicle, and a mounting structure.

In order to solve the above technical problem, the present invention adopts the following technical solution:
A framework includes a longitudinal beam, a crossbeam and a mounting base, a groove is provided on the longitudinal beam, the opening of the groove faces toward the outer side of the framework for mounting a current-receiving apparatus, the current-receiving apparatus includes a current-receiving apparatus case, the current-receiving apparatus case is connected to the framework by means of the mounting base, and the mounting base is fixed in the groove by means of welding or fasteners. The setting of the groove solves the problem that the current-receiving apparatus occupies a large transverse space, and ensures that the current-receiving apparatus still meets vehicle clearance requirements after being mounted.

The mounting base includes two mounting plates and a connecting plate connecting the two mounting plates; first teeth are provided on the current-receiving apparatus case, and second teeth meshing with the first teeth are provided on the mounting base.

The mounting base is an integrally formed member. Due to the limitation of space, the current-receiving apparatus mounting base cannot be designed in the same mounting way as a common current-receiving apparatus of a bogie, but is made into an integral casting or forging or welded structure, and a groove is provided on the longitudinal beam to solve the problem of insufficient transverse and vertical mounting spaces for the current-receiving apparatus and meet line clearance requirements;the current-receiving apparatus mounting base is provided with teeth arranged uniformly, which can solve the problem of adjusting the current-receiving apparatus in a height direction. The teeth are machined as a whole to ensure the machining accuracy and meet the requirements of matching the teeth of the current-receiving apparatus more easily.

The present invention further relates to a current-receiving apparatus, including a current-receiving apparatus case, rotary arms and collector shoes, the upper end of the rotary arm is hinged to the current-receiving apparatus case, the collector shoe is connected to the lower end of the rotary arm, the current-receiving apparatus case has a space for the rotary arm to tilt, and the rotary arm can drive the collector shoe to rotate about the hinged point until same comes into contact with a side surface of a third rail, or rotate until same comes into contact with a bottom surface of the third rail.

When the vehicle runs on the rail that receives current on the bottom surface, the rotating position of the rotary arm is controlled to adapt to the bottom current-receiving means of the third rail. When the line is laid as the third rail that receives current on the side surface, the rotary arm retracts a certain size to ensure that the collector shoe can just come into contact with the side surface of the third rail and ensure normal work. When the current-receiving apparatus does not work, the rotary arm can retract into the current-receiving apparatus case.

Therefore, the above-mentioned structure can achieve a current-receiving means that integrates the bottom surface and side surface with one bogie, and allow same to adapt to changes in the current-receiving means due to limited space of a railway bridge, thus ensuring the normal operation of vehicles.

In addition, the current-receiving apparatus case has a space for the rotary arm to tilt, so as to solve the problem of insufficient transverse and vertical moving spaces of the rotary arm.

As a further improvement of the above technical solution:
As a specific structural form of the current-receiving apparatus case, the current-receiving apparatus case includes a back plate and two wing plates, the two wing plates are connected to two ends of the back plate respectively to form a C-shaped member with an opening facing the third rail, the rotary arms are hinged to the ends of the two wing plates close to the third rail by means of first rotary shafts, and a C-shaped groove of the C-shaped member forms a space for the rotary arms to tilt.

The lower part of the rotary arm is bent toward the third rail, and the rotary arm is designed as a bending member with an opening facing the third rail, which can further solve the problem of insufficient transverse and vertical moving spaces for the rotary arm.

The collector shoe is hinged to the lower end of the rotary arm. Therefore, the position of the collector shoe can be self-adjusted in a small range to an optimal current-receiving position.

Two rotary arms are provided, the two rotary arms are arranged at an interval in the front-rear direction of the vehicle, the lower ends of the two rotary arms are connected by a second rotary shaft, and the collector shoes are hinged to the second rotary shaft. The second rotary shaft is an insulating member, which has certain strength and stiffness but does not have electrical conductivity.

The end of the collector shoe far away from the third rail is hinged to one end of a hydraulic cylinder, and the other end of the hydraulic cylinder is hinged to the rotary arm. The collector shoe and the rotary arm can rotate (swing) independently of each other, so as to adapt to the current-receiving means of the third rail in different modes; and the collector shoe and the rotary arm can retract into the current-receiving apparatus case smoothly.

A conductive plate in contact with the collector shoe is mounted at the lower ends of the two rotary arms, and a cable is arranged on the conductive plate. After the collector shoe receives current from the third rail, the current passes through the conductive plate and then is conducted to the vehicle by the cable.

Compared with the prior art, the advantages of the present invention are as follows:
1. The current-receiving apparatus and the framework of the present invention solve the problem of insufficient transverse and vertical mounting spaces for the current-receiving apparatus and meet line clearance requirements by the structural optimization design of the framework, the current-receiving apparatus case, the rotary arms, the mounting base, etc.
2.In the mounting structure of the current-receiving apparatus of the present invention, the mounting base meshes with the back plate of the current-receiving apparatus case by means of clamping teeth, so as to adapt to vertical adjustment with wheel wear.
3.The current-receiving apparatus of the present invention can achieve a current-receiving means that integrates the bottom surface and side surface with one bogie, and allow same to adapt to changes in the current-receiving means due to limited space of a railway bridge, thus ensuring the normal operation of vehicles.

### Brief Description of the Drawings

FIG. 1 shows a current-receiving mounting structure on a bottom surface of a third rail of a current-receiving apparatus in the prior art.
FIG. 2 is a main structural diagram of a current-receiving apparatus according to an embodiment of the present invention.
FIG. 3 is a side structural diagram of the current-receiving apparatus according to an embodiment of the present invention.
FIG. 4 is a structural diagram of the current-receiving apparatus at a retraction position according to an embodiment of the present invention.
FIG.5 is a structural diagram of the current-receiving apparatus at a side current-receiving position according to an embodiment of the present invention.
FIG. 6 is a structural diagram of the current-receiving apparatus at a bottom current-receiving position according to an embodiment of the present invention.
FIG. 7 is a structural diagram of a current-receiving apparatus mounting base.
FIG. 8 is a schematic diagram showing that the current-receiving apparatus is mounted to a framework.

Legend description: 1 - current-receiving apparatus case; 11 - back plate; 111 - first tooth; 12 - wing plate; 2 - rotary arm; 3 - collector shoe; 4 - third rail; 5 - first rotary shaft; 6 - second rotary shaft; 7 - conductive plate; 8 - cable; 9 - mounting base; 91 - mounting plate; 911 - second tooth; 92 - connecting plate; 10 - framework; 12 - longitudinal beam; 13 - groove; 14 - hydraulic cylinder.

### Detailed Description of the Embodiments

The present invention will be further described below with reference to specific preferred embodiments, but the scope of protection of the present invention is not limited thereby.

### Embodiment 1

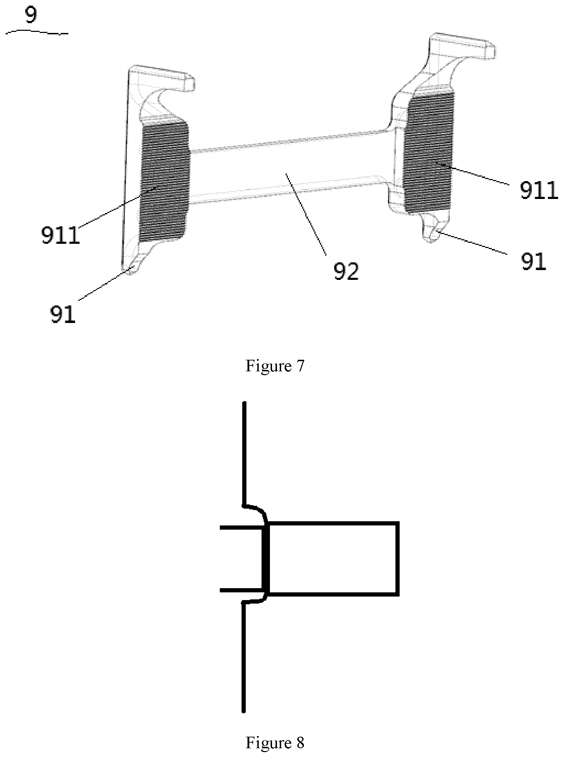

In this embodiment, as shown in FIG. 8, a groove 13 is provided on a longitudinal beam 12 of a framework 10, the opening of the groove 13 faces toward the outer side of the framework 10 for mounting a current-receiving apparatus, the current-receiving apparatus includes a current-receiving apparatus case 1, the current-receiving apparatus case 1 is connected to the framework 10 by means of a mounting base 9, and the mounting base 9 is fixed in the groove 13 by means of welding or fasteners. The setting of the groove solves the problem that the current-receiving apparatus occupies a large transverse space, and ensures that the current-receiving apparatus still meets vehicle clearance requirements after being mounted.

The mounting base 9 includes two mounting plates 91 and a connecting plate 92 connecting the two mounting plates 91. The mounting base 9 is an integrally formed member. First teeth 111 are provided on the back plate 11, and second teeth 911 meshing with the first teeth 111 are provided on the mounting plates 91.

Due to the limitation of space, the current-receiving apparatus mounting base cannot be designed in the same mounting way as a common current-receiving apparatus of a bogie, but is made into an integral casting or forging or welded structure. The teeth are machined as a whole to ensure the machining accuracy and meet the requirements of matching the teeth of the current-receiving apparatus more easily.

The current-receiving apparatus case 1 is assembled on the current-receiving apparatus mounting base 9 on the framework 10 by means of four sets of fasteners and the back plate 11, and the back plate 11 is provided with kidney-shaped holes with appropriate lengths, which can adapt to vertical adjustment with wheel wear. The second teeth 911 having the same size as the first teeth 111 on the back plate 11 are provided on the two mounting plates 91 of the current-receiving apparatus mounting base 9, and the pitch of adjacent teeth is a constant value, so the vertical adjustment amount can be directly ensured by means of the number of teeth, thus reducing the workload and improving the working efficiency, as shown in FIG. 7. The current-receiving apparatus mounting base 9 is fixed to the framework 10 by means of welding or bolting.

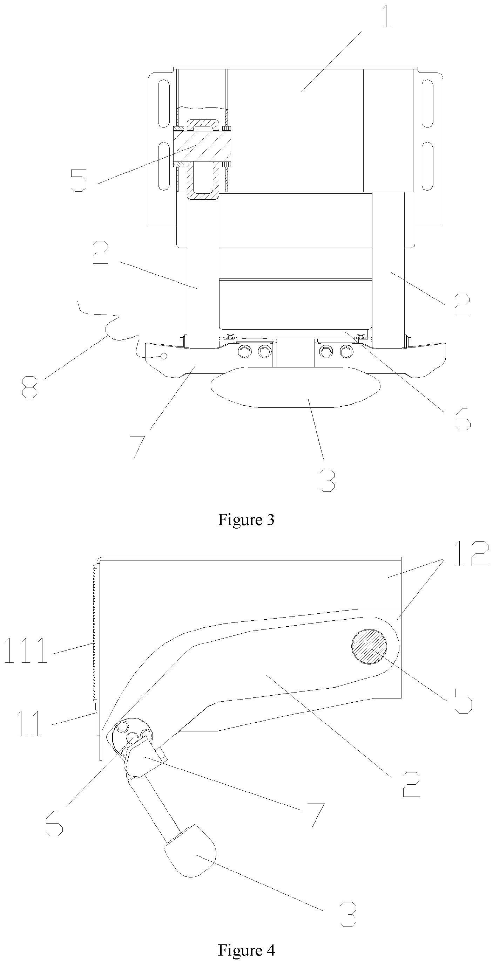

As shown in FIG. 2 and FIG. 3, the current-receiving apparatus of this embodiment includes a current-receiving apparatus case 1, rotary arms 2, collector shoes 3 and a conductive plate 7.

In this embodiment, the current-receiving apparatus case 1 includes a back plate 11 and two wing plates 12, the two wing plates 12 are connected to two ends of the back plate 11 respectively to form a C-shaped member with an opening facing a third rail 4, the rotary arms 2 are hinged to the ends of the two wing plates 12 close to the third rail 4 by means of first rotary shafts 5, the lower parts of the rotary arms 2 are bent toward the third rail 4, and a C-shaped groove of the C-shaped member forms a space for the rotary arms 2 to tilt.

Two rotary arms 2 are provided, the two rotary arms 2 are arranged at an interval in the front-rear direction of a vehicle, the middle parts of the two rotary arms 2 are fixedly connected by a connecting arm, and the lower ends of the two rotary arms 2 are connected by a second rotary shaft 6.The collector shoe3 is hinged to the second rotary shaft 6, the end of the collector shoe 3 far away from the third rail 4 is hinged to one end of a hydraulic cylinder 14, and the other end of the hydraulic cylinder 14 is hinged to the rotary arms 2, that is, the position of the collector shoe 3 can be adjusted in a small range.

The rotary arm2 can rotate about the first rotary shafts, and the collector shoe 3 can rotate about the second rotary shaft 6. The rotary arm2 drives the collector shoe 3 to rotate to adjust different working positions of the collector shoe 3, that is, a bottom current-receiving position (the collector shoe 3 is in contact with the bottom surface of the third rail 4), a side current-receiving position (the collector shoe 3 is in contact with the side surface of the third rail 4) and a retraction position.

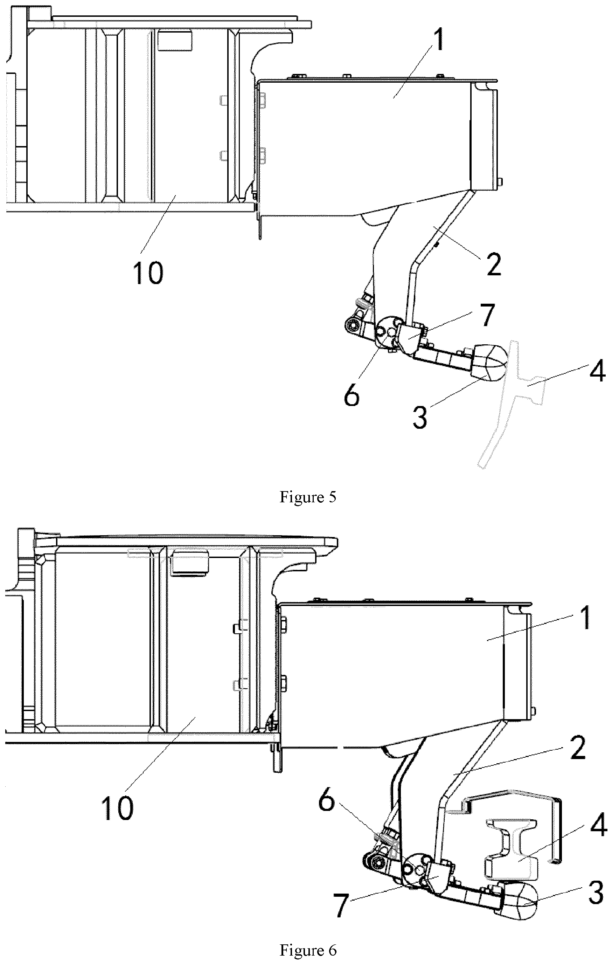

Therefore, when the vehicle runs on the rail that receives current on the bottom surface, the rotating positions of the rotary arms are controlled to adapt to the bottom current-receiving means of the third rail; when the line is laid as the third rail that receives current on the side surface, the rotary arms retract a certain size to ensure that the collector shoes can just come into contact with the side surface of the third rail and ensure normal work, as shown in FIG. 5 and FIG. 6; and when the current-receiving apparatus does not work, the rotary arms can retract into the current-receiving apparatus case 1, as shown in FIG. 4.

A conductive plate 7 in contact with the collector shoe 3 is mounted at the lower ends of the two rotary arms 2, and a cable 8 is arranged on the conductive plate 7. After the collector shoes 3 receive current from the third rail 4, the current passes through the conductive plate 7 and then is conducted to the vehicle by the cable 8.

The forgoing descriptions are only preferred embodiments of the present application, and do not limit the present application in any form. Although the present application is disclosed above with the preferred embodiments, the present application is not limited thereto. Some variations or modifications made by any skilled person familiar with the art using the disclosed technical contents without departing from the scope of the technical solution of the present application are equivalent to the embodiments, and all fall within the scope of the technical solution.

## Claims

1. A framework, the framework comprising a longitudinal beam (12), a crossbeam and a mounting base, wherein a groove (13) is provided on the longitudinal beam (12), and the opening of the groove (13) faces toward the outer side of the framework for mounting a current-receiving apparatus.

2. The framework according to claim 1, wherein the current-receiving apparatus comprises a current-receiving apparatus case (1), the current-receiving apparatus case (1) is connected to the framework (10) by means of the mounting base (9), and the mounting base (9) is fixed in the groove (13) by means of welding or fasteners.

3. The framework according to claim 2, wherein the mounting base (9) comprises two mounting plates (91) and a connecting plate (92) connecting the two mounting plates (91); first teeth (111) are provided on the current-receiving apparatus case (1), and second teeth (911) meshing with the first teeth (111) are provided on the mounting plates (91).

4. The framework according to claim 3, wherein the mounting base (9) is an integrally formed member.

5. A current-receiving apparatus, comprising a current-receiving apparatus case (1), rotary arms (2) and collector shoes (3), wherein the upper end of the rotary arm (2) is hinged to the current-receiving apparatus case (1), the collector shoe (3) is connected to the lower end of the rotary arm (2), the current-receiving apparatus case (1) has a space for the rotary arm (2) to tilt, and the rotary arm (2) can drive the collector shoe (3) to rotate about the hinged point until same comes into contact with a side surface of a third rail (4), or rotate until same comes into contact with a bottom surface of the third rail (4).

6. The current-receiving apparatus according to claim 5, wherein the current-receiving apparatus case (1) comprises a back plate (11) and two wing plates (12), the two wing plates (12) are connected to two ends of the back plate (11) respectively to form a C-shaped member with an opening facing the third rail (4), the rotary arms (2) are hinged to the ends of the two wing plates (12) close to the third rail (4) by means of first rotary shafts (5), and a C-shaped groove of the C-shaped member forms a space for the rotary arms (2) to tilt.

7. The current-receiving apparatus according to claim 5, wherein the lower part of the rotary arm (2) is bent toward the third rail (4).

8. The current-receiving apparatus according to claim 5, wherein the collector shoe (3) is hinged to the lower end of the rotary arm (2).

9. The current-receiving apparatus according to claim 8, wherein two rotary arms (2) are provided, the two rotary arms (2) are arranged at an interval in the front-rear direction of a vehicle, the lower ends of the two rotary arms (2) are connected by a second rotary shaft (6), and the collector shoes (3) are hinged to the second rotary shaft (6).

10. The current-receiving apparatus according to claim 9, wherein the end of the collector shoe (3) far away from the third rail (4) is hinged to one end of a hydraulic cylinder (14), and the other end of the hydraulic cylinder (14) is hinged to the rotary arm (2).

11. The current-receiving apparatus according to claim 9, wherein a conductive plate (7) in contact with the collector shoe (3) is mounted at the lower ends of the two rotary arms (2), and a cable (8) is arranged on the conductive plate (7).

12. The current-receiving apparatus according to claim 6, wherein the back plate (11) is provided with kidney-shaped holes.
